(19) **Europäisches Patentamt**
**European Patent Office**
**Office européen des brevets**

(11) **EP 4 614 960 A1**

(12) **EUROPEAN PATENT APPLICATION**
published in accordance with Art. 153(4) EPC

(43) Date of publication:
**10.09.2025 Bulletin 2025/37**

(21) Application number: **22964416.6**

(22) Date of filing: **02.11.2022**

(51) International Patent Classification (IPC):
*H04N 7/18* (2006.01)

(52) Cooperative Patent Classification (CPC):
**H04N 7/18**

(86) International application number:
**PCT/JP2022/041004**

(87) International publication number:
**WO 2024/095396 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **MITSUBISHI ELECTRIC
CORPORATION
Chiyoda-ku
Tokyo 100-8310 (JP)**

(72) Inventors:
• **YOSHIKAWA Kanae
Tokyo 100-8310 (JP)**
• **SHIMOTANI Mitsuo
Tokyo 100-8310 (JP)**
• **MIYAKE Masaya
Tokyo 100-8310 (JP)**

(74) Representative: **Hoffmann Eitle
Patent- und Rechtsanwälte PartmbB
Arabellastraße 30
81925 München (DE)**

(54) **SUSPICIOUS PERSON DETECTION DEVICE AND SUSPICIOUS PERSON DETECTION METHOD**

(57) The present disclosure has an object of detecting a suspicious person highly accurately. A suspicious person detection apparatus (101) according to the present disclosure includes: a first suspicion detector (11) detecting, from a recorded video of a surveillance camera (201), a person in a first suspicious state that is a psychological state predefined as a state of probably doing harm to others, and creating first suspicious information including identification information on the person in the first suspicious state; a second suspicion detector (12) detecting, from the recorded video, a person in a second suspicious state of performing a predefined behavior as a sign of doing harm to others, and creating second suspicious information including identification information on the person in the second suspicious state; and a suspicious person determining unit (13) identifying a suspicious person based on the first suspicious information and the second suspicious information, and creating suspicious person information including identification information on the suspicious person.

FIG. 1

## Description

BACKGROUND OF THE INVENTION

Field of the Invention

The present disclosure relates to a technology for detecting a suspicious person.

Description of the Background Art

Patent Document 1 discloses a personal intention estimation apparatus that extracts, from gaze direction information on people detected in a video, a plurality of information indicating behavioral intentions to enable automatic detection of a person with a particular intention as a suspicious person.

PRIOR ART DOCUMENT

PATENT DOCUMENT

Patent Document 1: Japanese Patent Application Laid-Open No. 2007-006427

SUMMARY

PROBLEM TO BE SOLVED BY THE INVENTION

The personal intention estimation apparatus of Patent Document 1 calculates a plurality of gaze features representing behavioral intentions of people from gaze direction information on the people, and determines, when one of the gaze features is higher than or equal to a threshold, a person with the one of the gaze features to be a suspicious person. Thus, even when a person without any intention of actually doing harm to others meets a condition on a gaze direction, the person may be falsely detected as a suspicious person.

The present disclosure has been conceived to solve the problem, and has an object of detecting a suspicious person with high accuracy.

MEANS TO SOLVE THE PROBLEM

A suspicious person detection apparatus according to the present disclosure includes: a first suspicion detector to detect a person in a first suspicious state from a recorded video of a surveillance camera, and create first suspicious information including identification information on the person in the first suspicious state, the first suspicious state being a psychological state predefined as a state of probably doing harm to others; a second suspicion detector to detect a person in a second suspicious state from the recorded video, and create second suspicious information including identification information on the person in the second suspicious state, the second suspicious state being performing a predefined behavior as a sign of doing harm to others; and a suspicious person determining unit to identify a suspicious person based on the first suspicious information and the second suspicious information, and create suspicious person information including identification information on the suspicious person.

EFFECTS OF THE INVENTION

Since the suspicious person detection apparatus according to the present disclosure detects a suspicious person, using both of the first suspicious state on a state of mind of a person and the second suspicious state on a behavior of the person, the apparatus can detect a suspicious person with high accuracy. The object, features, aspects, and advantages of the present disclosure will become more apparent from the following detailed description and the accompanying drawings.

BRIEF DESCRIPTION OF THE DRAWINGS

[FIG. 1] illustrates a configuration of a suspicious person detection system according to Embodiment 1 or 3.
[FIG. 2] is a flowchart illustrating operations of a suspicious person detection apparatus according to Embodiment 1.

[FIG. 3] illustrates an ID, an attribute, and detection details of each first suspicious state.

[FIG. 4] illustrates an ID, an attribute, behavior classification, and a harm attribute of each second suspicious state.

[FIG. 5] illustrates a state of detecting a suspicious person in a train.

[FIG. 6] illustrates a configuration of a suspicious person detection system according to Embodiment 2.

[FIG. 7] is a flowchart illustrating operations of a suspicious person detection apparatus according to Embodiment 2.

[FIG. 8] illustrates displaying suspicious person information on a train vision.

[FIG. 9] illustrates broadcasting the suspicious person information to a control room in a station.

[FIG. 10] is a flowchart illustrating operations of a suspicious person detection apparatus according to Embodiment 3.

[FIG. 11] illustrates a configuration of a suspicious person detection system according to Embodiment 4.

[FIG. 12] illustrates a hardware configuration of the suspicious person detection apparatus.

[FIG. 13] illustrates a hardware configuration of the suspicious person detection apparatus.

## DESCRIPTION OF THE PREFERRED EMBODIMENTS

<A. Embodiment 1>

<A-1. Configuration>

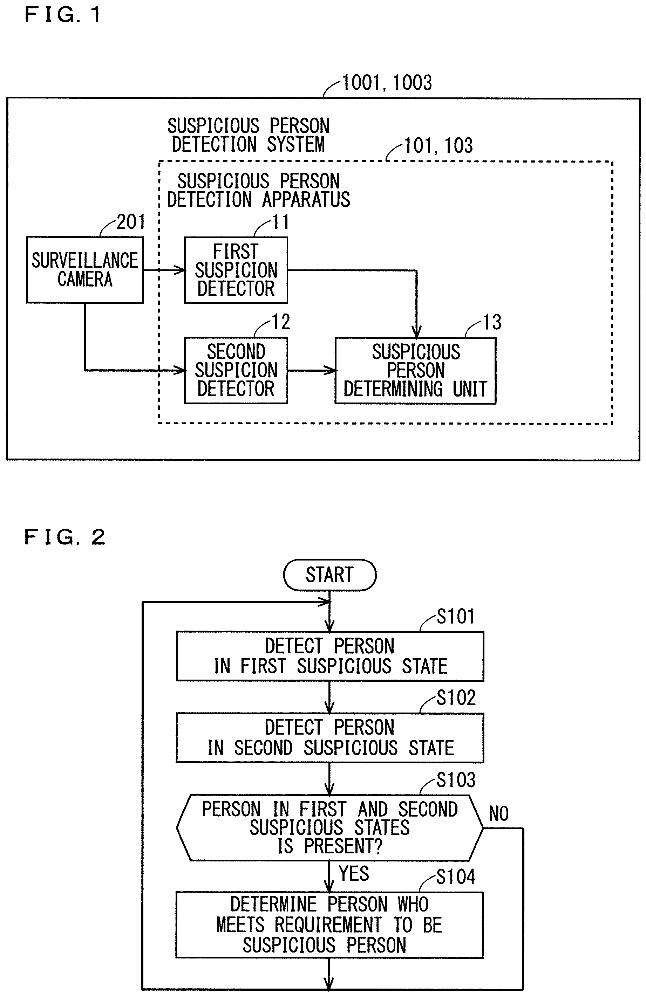

FIG. 1 illustrates a configuration of a suspicious person detection system 1001 according to Embodiment 1. The suspicious person detection system 1001 includes a suspicious person detection apparatus 101 and a surveillance camera 201.

The surveillance camera 201 is installed in a position such that its photo coverage includes an area from which a suspicious person is desirably detected (hereinafter a suspicious person detection area). For example, when the suspicious person detection area is in a train, the surveillance camera 201 is installed in the train. In Embodiment 1, the suspicious person detection area is assumed to be in a train.

The suspicious person detection apparatus 101 includes a first suspicion detector 11, a second suspicion detector 12, and a suspicious person determining unit 13.

The first suspicion detector 11 detects a train passenger in a first suspicious state, based on a recorded video of the surveillance camera 201. The first suspicious state is a psychological state predefined as a state of probably doing harm to others. Once detecting a person in the first suspicious state, the first suspicion detector 11 creates first suspicious information including identification information that is information for identifying the person.

The second suspicion detector 12 detects a train passenger in a second suspicious state, based on a recorded video of the surveillance camera 201. The second suspicious state is a state of performing a predefined behavior as a sign of doing harm to others. Once detecting a person in the second suspicious state, the second suspicion detector 12 creates second suspicious information including identification information that is information for identifying the person.

The suspicious person determining unit 13 determines a person both in the first and second suspicious states to be a suspicious person, based on the first suspicious information obtained from the first suspicion detector 11 and the second suspicious information obtained from the second suspicion detector 12, and creates suspicious person information.

<A-2. Operations>

FIG. 2 is a flowchart illustrating operations of the suspicious person detection apparatus 101. Hereinafter, the operations of the suspicious person detection apparatus 101 will be described with reference to the flowchart in FIG. 2.

Once the suspicious person detection system 1001 starts operations, the first suspicion detector 11 obtains a recorded video from the surveillance camera 201 to execute a first suspicious state detecting process in Step S101. The first suspicion detector 11 detects a person in the first suspicious state from among people appearing in the recorded video of the surveillance camera 201 in the first suspicious state detecting process.

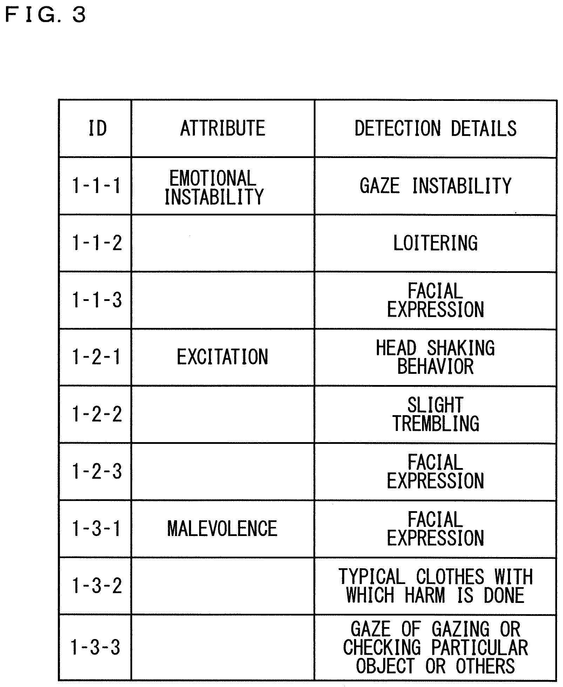

The first suspicious state is a psychological or physiological state predefined as a suspicious state of probably doing harm to people. FIG. 3 illustrates examples of the first suspicious state. In FIG. 3, the first column represents an ID of each of the first suspicious states, the second column represents an attribute of the first suspicious state, and the third column represents detection details of the first suspicious state.

Examples of the attribute of the first suspicious state include "emotional instability", "excitation", and "malevolence". The first suspicious state with the attribute of "emotional instability" is detected by gaze instability, loitering, or a particular facial expression. The first suspicion detector 11 identifies gaze directions of people appearing in a recorded video. When a gaze direction of a person moves a predefined number of times or more within a predefined time, the first suspicion detector 11 determines "gaze direction instability", and determines the person to be in the first suspicious state with the attribute of "emotional instability". Here, the first suspicion detector 11 may determine "gaze direction instability" using a direction of the face of the person, instead of the gaze direction. Furthermore, the first suspicion detector 11 recognizes positions of the people appearing in the recorded video. When a person is wandering irrespective of particular facilities or objects, the first suspicion detector 11 determines "loitering", and determines the person to be in the first suspicious state with the attribute of "emotional instability". Furthermore, the first suspicion detector 11 recognizes facial expressions of the people appearing in the recorded video. When detecting that a person has a vacant expression or a nervous expression, the first suspicion detector 11 determines the person to be in the first suspicious state with the attribute of "emotional instability".

The first suspicious state with the attribute of "excitation" is detected by a head shaking behavior, slight trembling, or a particular facial expression. For example, when detecting that a person continues to shake his or her head vertically or horizontally for a predefined time or longer, the first suspicion detector 11 determines the person to be in the first suspicious state with the attribute of "excitation". Furthermore, when detecting that the fist, the shoulder, or another body site of a person is slightly trembling, the first suspicion detector 11 determines the person to be in the first suspicious state with the attribute of "excitation". Furthermore, when detecting widening eyes, a tic, or an exciting expression or facial color of a person or detecting that a person is murmuring something with his or her mouth being open, the first suspicion detector 11 determines the person to be in the first suspicious state with the attribute of "excitation".

The first suspicious state with the attribute of "malevolence" is detected by a particular facial expression, clothes typically worn by a person who does harm to others, or a particular gaze or behavior. For example, when detecting an angry expression of a person or detecting a person who is shouting loudly, the first suspicion detector 11 determines the person to be in the first suspicious state with the attribute of "malevolence". Furthermore, when detecting that a person wears a combat costume such as military fatigues or a mask, the first suspicion detector 11 determines the person to be in the first suspicious state with the attribute of "malevolence". Furthermore, when detecting that a person is performing a behavior of gazing or checking a particular object or others, the first suspicion detector 11 determines the person to be in the first suspicious state with the attribute of "malevolence".

Next, the second suspicion detector 12 obtains a recorded video from the surveillance camera 201 to execute a second suspicious state detecting process in Step S102. The second suspicion detector 12 detects a person in the second suspicious state from among people appearing in the recorded video of the surveillance camera 201 in the second suspicious state detecting process.

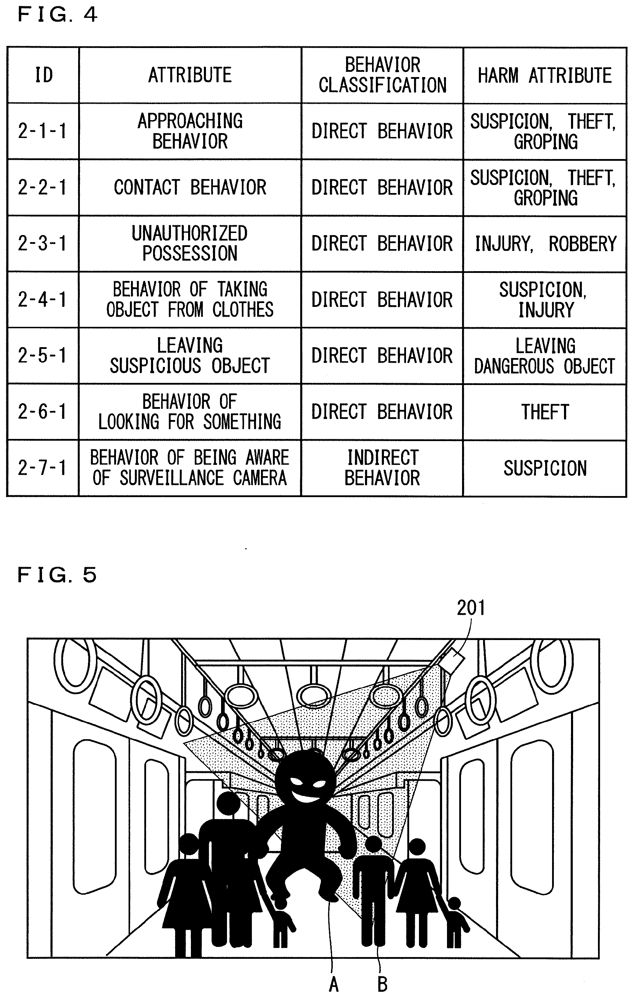

The second suspicious state is a state of performing a predefined behavior as a sign of doing harm to others. FIG. 4 illustrates examples of the second suspicious state. In FIG. 4, the first column represents an ID of each of the second suspicious states, the second column represents an attribute of the second suspicious state, the third column represents behavior classification of the second suspicious state, and the fourth column represents a harm attribute of the second suspicious state.

Examples of the attribute of the second suspicious state include an approaching behavior, a contact behavior, an unauthorized possession, a behavior of taking an object from clothes, broadcasting a suspicious object, a behavior of looking for something, and a behavior of being aware of a surveillance camera. The behavior classification of the second suspicious state includes direct behaviors and indirect behaviors. The approaching behavior, the contact behavior, the unauthorized possession, the behavior of taking an object from clothes, broadcasting of a suspicious object, and the behavior of looking for something are direct behaviors, and the behavior of being aware of a surveillance camera is an indirect behavior.

The approaching behavior is detected as a behavior of following a particular person and approaching the person. The harm attributes of the approaching behaviors are suspicion, theft, and groping.

The contact behavior is detected as a behavior of bringing a part of the body or an object in close proximity to a particular person. The harm attributes of the contact behaviors are suspicion, theft, and groping.

The unauthorized possession is detected as possession of a weapon or an imaging device. The harm attributes of the unauthorized possession are injury and robbery.

The behavior of taking an object from clothes is detected as a behavior of taking something from the clothes. The harm attributes of the behavior of taking an object from clothes are suspicion and injury.

Leaving a suspicious object is detected as a behavior of leaving behind an object with invisible inside contents, such as a sack or a bag. The harm attribute of leaving a suspicious object is leaving a dangerous object.

The behavior of looking for something is detected as a behavior of looking for a particular object. The harm attribute of the behavior of looking for something is theft.

The behavior of being aware of a surveillance camera is detected as a behavior of moving to a blind spot of the surveillance camera, a behavior of identifying the surveillance camera, or a behavior of avoiding a regulator. For example, when detecting that a person has gazed the surveillance camera 201 a predefined number of times or more within a predefined time, the second suspicion detector 12 may determine that the person had the behavior of being aware of the surveillance camera. The harm attribute of the behavior of being aware of the surveillance camera is suspicion.

Next, the suspicious person determining unit 13 determines the presence or absence of a person both in the first and second suspicious states in Step S103. In the presence of the person who meets the requirement, the suspicious person determining unit 13 determines the person to be a suspicious person in Step S104, and creates suspicious person information. In the absence of the person both in the first and second suspicious states, the processes of the suspicious person detection apparatus 101 are returned to Step S101, and the aforementioned processes are repeated.

FIG. 5 illustrates a state of detecting a suspicious person in a train. The surveillance camera 201 is installed in the train to record passengers in the train. It is assumed that a person A has a malevolent facial expression, and is approaching a person B. Here, the first suspicion detector 11 detects the malevolent facial expression of the person A to determine the person A to be in the first suspicious state (ID = 1 - 3 - 1). Furthermore, the second suspicion detector 12 detects that the person A is approaching the person B to determine the person A to be in the second suspicious state (ID = 2 - 1 - 1). The suspicious person determining unit 13 determines the person A to be a suspicious person because the person A is both in the first and second suspicious states.

<A-3. Advantages>

The suspicious person detection apparatus 101 according to Embodiment 1 includes the first suspicion detector 11, the second suspicion detector 12, and the suspicious person determining unit 13. The first suspicion detector 11 detects a person in a first suspicious state from a recorded video of the surveillance camera 201, the first suspicious state being a psychological state predefined as a state of probably doing harm to others. Furthermore, the first suspicion detector 11 creates the first suspicious information including identification information on the person in the first suspicious state. The second suspicion detector 12 detects a person in a second suspicious state from the recorded video of the surveillance camera 201, the second suspicious state being performing a predefined behavior as a sign of doing harm to others. Furthermore, the second suspicion detector 12 creates second suspicious information including identification information on the person in the second suspicious state. The suspicious person determining unit 13 identifies a suspicious person based on the first suspicious information and the second suspicious information, and creates suspicious person information including identification information on the suspicious person. With the aforementioned configuration, the suspicious person detection apparatus 101 can detect a suspicious person with high accuracy using both of a psychological state and a behavior as a sign of doing harm.

<A-4. Modifications>

In the aforementioned description, the first suspicion detector 11 detects a person in the first suspicious state from the recorded video of the surveillance camera 201. The first suspicion detector 11 may use another device such as a millimeter wave radar, a speech recognizer, an infrared sensor, an ultrasound sensor, or Lidar in addition to the surveillance camera 201 to detect a person in the first suspicious state. This increases the accuracy of detecting a person in the first suspicious state.

For example, the first suspicion detector 11 may obtain a respiration rate of a person using a millimeter wave radar, and determine a person whose respiration rate is higher than a threshold, that is, a person who breathes heavily to be a person in the first suspicious state.

Furthermore, the first suspicion detector 11 may recognize speech of a person using a speech recognizer, and determine whether the person is in the first suspicious state, from the speech of the person.

Although the suspicious person detection area of the suspicious person detection apparatus 101 is inside a train, the suspicious person detection area may be inside another mobile object such as a bus, a ship, or an airplane. Furthermore, the suspicious person detection area is not limited to inside the mobile objects but may be inside stations, platforms, commercial facilities such as department stores, shops, and gyms, event venues, aisles, and on roads.

<B. Embodiment 2>

<B-1. Configuration>

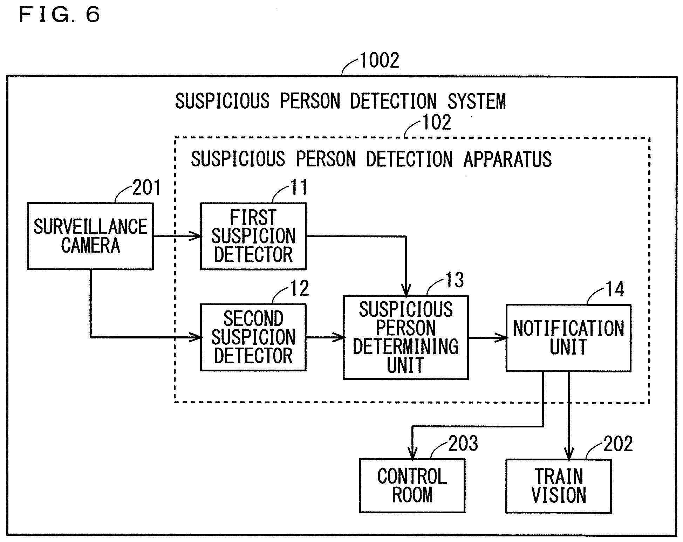

FIG. 6 illustrates a configuration of a suspicious person detection system 1002 according to Embodiment 2. The suspicious person detection system 1002 includes a suspicious person detection apparatus 102, the surveillance camera 201, a train vision 202, and a control room 203. The suspicious person detection apparatus 102 includes a notification unit 14, in addition to the configuration of the suspicious person detection apparatus 101 according to Embodiment 1.

The notification unit 14 notifies an outside of the suspicious person detection apparatus 102 of suspicious person information that is information on a suspicious person determined by the suspicious person determining unit 13.

The train vision 202 includes a display. The train vision 202 displays the suspicious person information obtained from the notification unit 14 on the display included in the train vision 202, and broadcasts the suspicious person information to passengers.

The control room 203 outputs the suspicious person information obtained from the notification unit 14, from a display or a voice broadcast device included in the control room 203 to broadcast the suspicious person information to control room staff members.

<B-2. Operations>

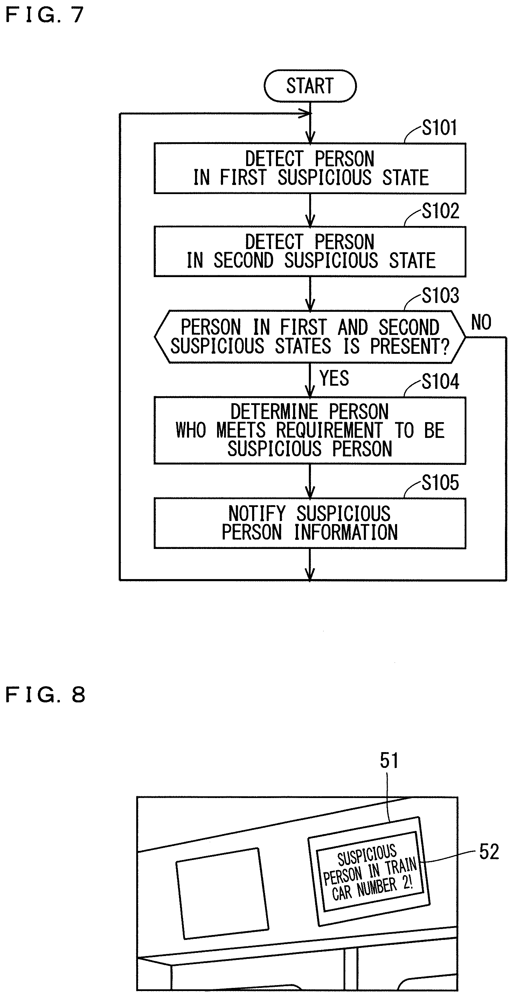

FIG. 7 is a flowchart illustrating operations of the suspicious person detection apparatus 102. The procedure in FIG. 7 is obtained by adding Step S105 after Step S104 to the procedure indicating the operations of the suspicious person detection apparatus 102 according to Embodiment 1 in FIG. 2.

In Step S105, the notification unit 14 notifies the train vision 202 or the control room 203 of the suspicious person information.

FIG. 8 illustrates displaying outline information 52 indicating "Suspicious person in train car number 2!" on a state of a suspicious person, on a display 51 of the train vision 202.

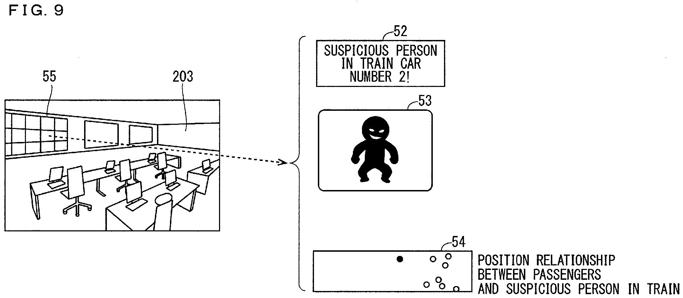

The control room 203 outputs the suspicious person information obtained from the notification unit 14, from the display or the voice broadcast device included in the control room 203 to broadcast the suspicious person information to the control room staff members. FIG. 9 illustrates displaying the suspicious person information on a display 55 in the control room 203. The outline information 52 indicating "Suspicious person in train car number 2!" on the state of the suspicious person, a video 53 of the suspicious person and its periphery, and a video 54 indicating positions of the suspicious person and other passengers in the train including the suspicious person are displayed on the display 55.

The display in FIG. 9 is an example of broadcasting the suspicious person information. The suspicious person information may be broadcast by voice. Furthermore, detailed information on the suspicious person or the passengers may be displayed, or information useful for coping with the suspicious person may be displayed to clarify a train car position of the suspicious person and a train car position of a conductor in the whole train cars of the train.

<B-3. Advantages>

The suspicious person detection apparatus 102 according to Embodiment 2 includes the notification unit 14 that notifies an outside of the suspicious person detection apparatus 102 of the suspicious person information. Thus, the suspicious person detection apparatus 102 can notify the outside of the suspicious person detection apparatus 102 of the suspicious person information.

<B-4. Modifications>

Once detecting a person in the first suspicious state, the first suspicion detector 11 creates information on the person as the first suspicious information. The first suspicious information may include first suspicious state attribute information indicating an attribute of the first suspicious state. As illustrated in FIG. 3, the attribute of the first suspicious state is, for example, at least one of "emotional instability", "excitation", or "malevolence".

Once detecting a person in the second suspicious state, the second suspicion detector 12 creates information on the person as the second suspicious information. The second suspicious information may include second suspicious state attribute information indicating an attribute of the second suspicious state. As illustrated in FIG. 4, the attribute of the second suspicious state is, for example, at least one of an "approaching behavior, a "contact behavior", a "behavior of taking an object from clothes", "leaving a suspicious object", a "behavior of looking for something", or a "behavior of being aware of a surveillance camera".

Once detecting a suspicious person, the suspicious person determining unit 13 creates the suspicious person information that is information on the suspicious person. The suspicious person information may include the first suspicious information or the second suspicious information. This case, particularly, Embodiment 2 produces an advantage of allowing notification of a detailed attribute on a suspicious person.

The suspicious person determining unit 13 may identify a harm attribute of a suspicious person, based on the second suspicious state attribute information extracted by the second suspicion detector 12, and include harm attribute information indicating the harm attribute in the suspicious person information. The harm attributes include at least one of suspicion, theft, groping, injury, robbery, or leaving a dangerous object. FIG. 4 indicates a correspondence between the second suspicious state attribute information and the harm attributes. This case, particularly, Embodiment 2 produces an advantage of allowing notification of a detailed attribute on a suspicious person.

The suspicious person determining unit 13 may determine a person with a particular combination of the first and second suspicious states as a suspicious person having a particular harm attribute. For example, the suspicious person determining unit 13 may determine, as a suspicious person with an attribute of injury, a person in the first suspicious state with the attribute of malevolence and in the second suspicious state with the attribute of the unauthorized possession or with the attribute of taking an object from clothes, and create suspicious person information.

Furthermore, the suspicious person determining unit 13 may determine, as a suspicious person with an attribute of groping or theft, a person in the first suspicious state with the attribute of emotional instability and in the second suspicious state with the attribute of a contact behavior, and create suspicious person information.

Furthermore, the suspicious person determining unit 13 may determine, as a suspicious person with an attribute of leaving a dangerous object, a person in the first suspicious state with the attribute of emotional instability and in the second suspicious state with the attribute of leaving a suspicious object, and create suspicious person information.

<C. Embodiment 3>

<C-1. Configuration>

FIG. 1 also illustrates a configuration of a suspicious person detection system 1003 according to Embodiment 3, which is identical to the suspicious person detection system 1001 according to Embodiment 1. The suspicious person detection system 1003 includes a suspicious person detection apparatus 103 and the surveillance camera 201. The suspicious person detection apparatus 103 has the same configuration as that of the suspicious person detection apparatus 101 according to Embodiment 1.

The first suspicion detector 11 detects a train passenger in the first suspicious state, based on a video of the surveillance camera 201. In Embodiment 3, the first suspicious state is a psychological state predefined as a state of probably doing harm to others, and indicates a state in which a first suspicious degree that is a psychologically suspicious degree is higher than or equal to a first threshold. The first suspicion detector 11 calculates the first suspicious degree of a person appearing in the surveillance camera 201 in a predefined psychological detection method, and determines a person with the first suspicious degree higher than or equal to the first threshold to be in the first suspicious state. The first suspicion detector 11 includes the first suspicious degree in the first suspicious information.

The second suspicion detector 12 detects a train passenger in the second suspicious state, based on a video of the surveillance camera 201. In Embodiment 3, the second suspicious state is a state of performing a predefined behavior as a sign of doing harm to others, and indicates a state in which a second suspicious degree that is a behavioral suspicious degree is higher than or equal to a predefined second threshold. The second suspicion detector 12 calculates the second suspicious degree of a person appearing in the surveillance camera 201 in the predefined psychological detection method, and determines a person with the second suspicious degree higher than or equal to the second threshold to be in the second suspicious state. The second suspicion detector 12 includes the second suspicious degree in the second suspicious information.

The suspicious person determining unit 13 determines a person both in the first and second suspicious states whose first and second suspicious degrees satisfy a predefined combined condition to be a suspicious person, based on the first suspicious information obtained from the first suspicion detector 11 and the second suspicious information obtained from the second suspicion detector 12, and creates suspicious person information.

<C-2. Operations>

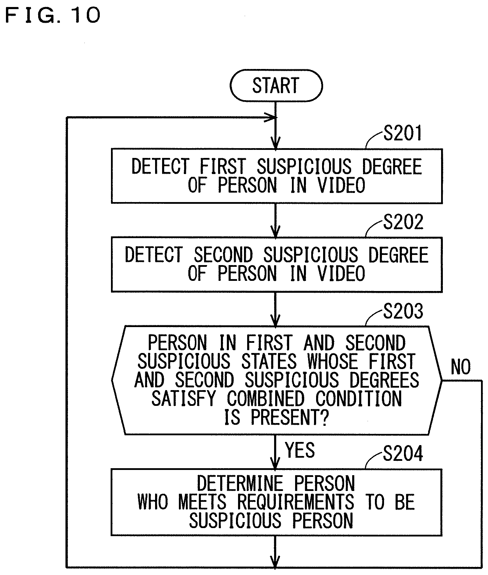

FIG. 10 is a flowchart illustrating operations of the suspicious person detection apparatus 103. Hereinafter, the operations of the suspicious person detection apparatus 103 will be described with reference to the procedure in FIG. 10.

Once the suspicious person detection system 1003 starts operations, the first suspicion detector 11 obtains a recorded video from the surveillance camera 201, and calculates a first suspicious degree PSY that is a psychologically suspicious degree of a person appearing in the recorded video in Step S201. This process is obtained by including the first suspicious degree PSY in a logic of detecting the first suspicious state obtained by the first suspicion detector 11 described in Embodiment 1.

For example, the detection logic of detecting an unstable gaze with the attribute of emotional instability in ID 1-1-1 in FIG. 3 is "detecting a gaze movement to a different region a predefined number of times or more within a predefined time" in Embodiment 1. In contrast, the first suspicion detector 11 according to Embodiment 3 calculates the first suspicious degree PSY to be a higher value as the number of gaze movements increases, determines a person with the first suspicious degree PSY higher than the first threshold to be in the first suspicious degree, and creates the first suspicious information.

The first suspicious degree PSY is a normalized value from 0 to 1. A person whose first suspicious degree PSY is 0 does not seem like a suspicious person. A person whose first suspicious degree PSY is 1 seems like a suspicious person. The first threshold is, for example, 0.5.

Next, the second suspicion detector 12 obtains a recorded video from the surveillance camera 201, and calculates a second suspicious degree PHY that is a behavioral suspicious degree of a person appearing in the recorded video in Step S202. This process is obtained by including the second suspicious degree PHY in a logic of detecting the second suspicious state obtained by the second suspicion detector 12 described in Embodiment 1.

For example, the detection logic of the behavior of being aware of a surveillance camera in ID 2-2-1 in FIG. 4 is

**EP 4 614 960 A1**

"detecting a behavior of identifying the surveillance camera" in Embodiment 1. In contrast, the second suspicion detector 12 according to Embodiment 3 calculates the second suspicious degree PHY to be a higher value as the number of identifying the surveillance camera increases within a certain time, determines a person with the second suspicious degree PHY higher than the second threshold to be in the second suspicious degree, and creates the second suspicious information.

The second suspicious degree PHY is a normalized value from 0 to 1. A person whose second suspicious degree PHY is 0 does not seem like a suspicious person. A person whose second suspicious degree PHY is 1 seems like a suspicious person. The second threshold is, for example, 0.5.

Next, the suspicious person determining unit 13 determines the presence or absence of a person both in the first and second suspicious states whose first suspicious degrees PSY and second suspicious degrees PHY satisfy a predefined combined condition in Step S203. In the presence of a person who meets the requirements in Step S203, the suspicious person determining unit 13 determines the person to be a suspicious person in Step S204, and creates suspicious person information. Step S204 is identical to Step S104 in FIG. 2. Then, the processes of the suspicious person detection apparatus 103 are returned to Step S201.

In the absence of the person who meets the requirements in Step S203, the processes of the suspicious person detection apparatus 103 are returned to Step S201.

In Step S203, the predefined combined condition is, for example, any one of the following logics 1, 2, 3, and 4.

Logic 1:

$$PSY + PHY \geq 1.5$$

Logic 2:

$$PSY \times PHY \geq 0.5$$

Logic 3:

$$PSY = 1.0,\ PHY \geq 0.5$$

Logic 4:

$$PSY \geq 0.5,\ PHY = 1.0$$

A logic in which a person with one of the first suspicious degrees PSY and second suspicious degrees PHY being lower and with the other of the first suspicious degrees PSY and second suspicious degrees PHY being higher is determined to be a suspicious person may be used. Alternatively, a logic in which a person with both of the first suspicious degrees PSY and second suspicious degrees PHY being higher is determined to be a suspicious person may be used.

<C-3. Advantages>

In the suspicious person detection apparatus 103 according to Embodiment 3, the first suspicion detector 11 detects a first suspicious degree of a person appearing in the recorded video, determines a person with the first suspicious degree higher than or equal to a predefined first threshold to be in the first suspicious state, and includes information on the first suspicious degree in the first suspicious information, the first suspicious degree representing a degree of the first suspicious state. Furthermore, the second suspicion detector 12 detects a second suspicious degree of a person appearing in the recorded video, determines a person with the second suspicious degree higher than or equal to a predefined second threshold to be in the second suspicious state, and includes information on the second suspicious degree in the second suspicious information, the second suspicious degree representing a degree of the second suspicious state. Furthermore, the suspicious person determining unit 13 determines a person in the first suspicious state and in the second suspicious state whose first and second suspicious degrees satisfy a predefined combined condition to be the suspicious person. Since the suspicious person detection apparatus 103 determines a suspicious person in consideration of the combined condition on the first and second suspicious degrees, the apparatus can detect a suspicious person with high accuracy.

8

<C-4. Modifications>

The combined condition on the first suspicious degrees PSY and second suspicious degrees PHY may be variable according to a first suspicious state attribute, a second suspicious state attribute, or a harm attribute. For example, when in the presence of a person in the first and second suspicious states, a harm attribute of the person is injury or robbery, the suspicious person determining unit 13 may easily detect the person as a suspicious person, using the following combined conditions.

Logic 1'

$$: PSY + PHY \geq 1.2$$

Logic 2':

$$PSY \times PHY \geq 0.4$$

The first suspicious degrees PSY and second suspicious degrees PHY may be calculated using machine learning. The first suspicion detector 11 may calculate the first suspicious degree with a learning result of predefined first machine learning using the recorded video of the surveillance camera 201 as an input. Furthermore, the second suspicion detector 12 may calculate the second suspicious degree with a learning result of predefined second machine learning using the recorded video of the surveillance camera 201 as an input. A suspicious person can be detected with high accuracy, using machine learning.

<D. Embodiment 4>

<D-1. Configuration>

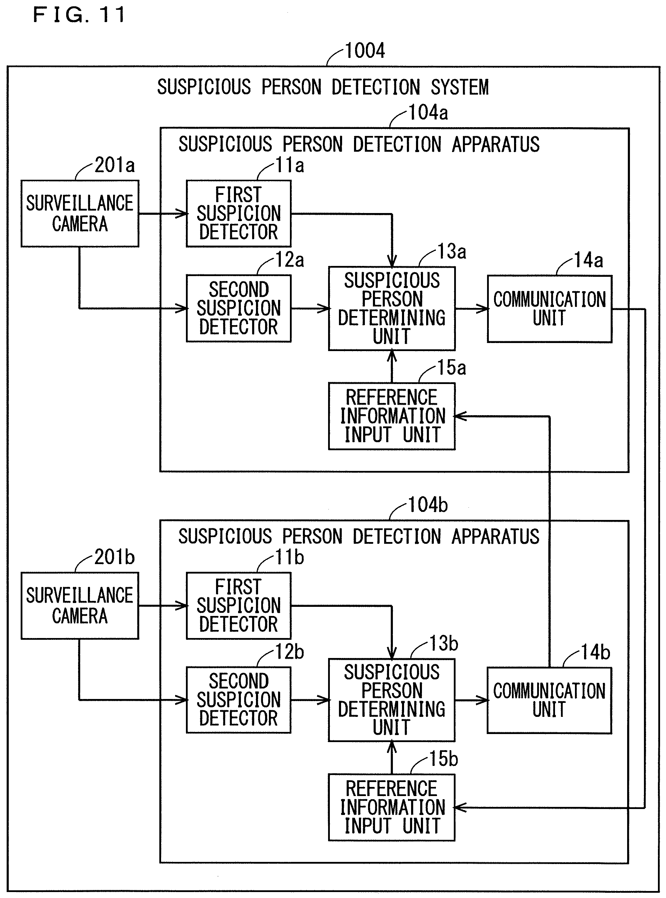

FIG. 11 illustrates a configuration of a suspicious person detection system 1004 according to Embodiment 4. The suspicious person detection system 1004 includes a plurality of suspicious person detection apparatuses 104a and 104b, and a plurality of surveillance cameras 201a and 201b corresponding to the plurality of suspicious person detection apparatuses 104a and 104b, respectively. Although FIG. 11 illustrates the two suspicious person detection apparatuses 104a and 104b and the two surveillance cameras 201a and 201b, the number of the suspicious person detection apparatuses and the number of the surveillance cameras should be multiple, and are not limited to two.

The suspicious person detection apparatus 104a includes a notification unit 14a and a reference information input unit 15a, in addition to the configuration of the suspicious person detection apparatus 103 according to Embodiment 3. The suspicious person detection apparatus 104b has the same configuration as that of the suspicious person detection apparatus 104a. "a" is appended to the end of the reference numeral of each of the constituent elements of the suspicious person detection apparatus 104a, whereas "b" is appended to the end of the reference numeral of each of the constituent elements of the suspicious person detection apparatus 104b as necessary to distinguish between the suspicious person detection apparatuses 104a and 104b.

In the suspicious person detection system 1004, the suspicious person detection apparatuses 104a and 104b detect a suspicious person in a coordinated manner. Hereinafter, a case where the suspicious person detection apparatus 104a detects a suspicious person using information obtained from the suspicious person detection apparatus 104b will be described.

The first suspicion detector 11b in the suspicious person detection apparatus 104b calculates a first suspicious degree PSYb of a person appearing in a video of the surveillance camera 201b, determines a person with the first suspicious degree PSYb **higher** than the first threshold to be in the first suspicious degree, and creates the first suspicious information.

The second suspicion detector 12b calculates a second suspicious degree PHYb of a person appearing in the video of the surveillance camera 201b, determines a person with the second suspicious degree PHYb higher than the second threshold to be in the second suspicious degree, and creates the second suspicious information.

The suspicious person determining unit 13b determines a person both in the first and second suspicious states whose first and second suspicious degrees satisfy a predefined combined condition to be a suspicious person, based on the first suspicious information obtained from the first suspicion detector 11b and the second suspicious information obtained from the second suspicion detector 12b, and creates suspicious person information.

Furthermore, the suspicious person determining unit 13b may determine a person whose first and second suspicious degrees do not satisfy the predefined combined condition but satisfy a certain condition to be a suspicious candidate, and create suspicious candidate information including the first suspicious information and the second suspicious information on the suspicious candidate. For example, the suspicious person determining unit 13b may determine a person with the first suspicious degree PSYb ≥ 0.3 and with the second suspicious degree PHYb ≥ 0.3 to be a suspicious candidate.

The notification unit 14b notifies the suspicious person detection apparatus 104a of the suspicious person information or the suspicious candidate information created by the suspicious person determining unit 13b. The reference information input unit 15a of the suspicious person detection apparatus 104a obtains, as reference information, the suspicious person information or the suspicious candidate information notified from the notification unit 14b of the suspicious person detection apparatus 104b.

The suspicious person determining unit 13a creates suspicious person information, based on the first suspicious information obtained from the first suspicion detector 11a, the second suspicious information obtained from the second suspicion detector 12a, and the reference information obtained from the reference information input unit 15a.

The suspicious person determining unit 13a checks whether a person in the first and second suspicious states who has been detected by the first suspicion detector 11a and the second suspicion detector 12a matches the suspicious person or the suspicious candidate obtained from the reference information. The fact that the person matches the suspicious person or the suspicious candidate means that the person detected as the suspicious person or the suspicious candidate by the suspicious person detection apparatus 104b has also been picked up by the suspicious person detection apparatus 104a as a person in a suspicious state. Thus, the suspicious person determining unit 13a mitigates the combined condition on the first and second suspicious degrees for determining a suspicious person. For example, the suspicious person determining unit 13a adopts the following logics. PSYa denotes the first suspicious degree detected by the first suspicion detector 11a, whereas PHYa denotes the second suspicious degree detected by the second suspicion detector 12a.

Logic 1a:

$$PSYa + PHYa + (PSYb + PHYb)/4 \geq 1.5$$

Logic 2a:

$$PSYa \times PHYa \geq 0.4 \text{ AND } PSYb \times PHYb \geq 0.2$$

In the aforementioned description, the suspicious person detection apparatus 104a detects a suspicious person using the suspicious person information detected by the suspicious person detection apparatus 104b as the reference information. Similarly, the suspicious person detection apparatus 104b can detect a suspicious person using the suspicious person information detected by the suspicious person detection apparatus 104a as the reference information.

<D-2. Advantages>

The suspicious person detection apparatus 104a obtains the suspicious person information created by the different suspicious person detection apparatus 104b, from the different suspicious person detection apparatus 104b as reference information, and the suspicious person determining unit 13a identifies the suspicious person based on the first suspicious information, the second suspicious information, and the reference information. As such, sharing the suspicious person information between the suspicious person detection apparatuses 104a and 104b can detect a suspicious person with high accuracy.

<E. Hardware configuration>

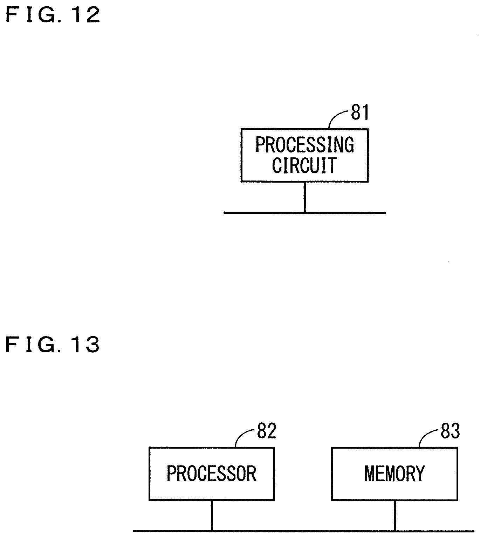

A processing circuit 81 in FIG. 12 implements the first suspicion detector 11, the second suspicion detector 12, the suspicious person determining unit 13, the notification unit 14, and the reference information input unit 15 in each of the suspicious person detection apparatuses 101, 102, 103, 104a, and 104b. In other words, the processing circuit 81 includes the first suspicion detector 11, the second suspicion detector 12, the suspicious person determining unit 13, the notification unit 14, and the reference information input unit 15 (hereinafter referred to as the "first suspicion detector 11, etc."). The processing circuit 81 may be dedicated hardware, or a processor that executes a program stored in a memory. The processor is, for example, a central processing unit, a processing unit, an arithmetic unit, a microprocessor, a microcomputer, or a Digital Signal Processor (DSP).

When the processing circuit 81 is dedicated hardware, the processing circuit 81 is, for example, a single circuit, a composite circuit, a programmed processor, a parallel-programmed processor, an application-specific integrated circuit (ASIC), a field-programmable gate array (FPGA), or any combination of these. Each function of the constituent elements of the first suspicion detector 11, etc. may be implemented by a plurality of the processing circuits 81, or the functions may be collectively implemented by a single processing circuit.

When the processing circuit 81 is a processor, the functions of the first suspicion detector 11, etc. are implemented by any combinations with software, etc. (software, firmware, or the software and the firmware). The software, etc. is described as a program, and stored in a memory. As illustrated in FIG. 13, a processor 82 to be applied as the processing circuit 81 implements the functions of each of the units by reading and executing a program stored in a memory 83. In other words, each of the suspicious person detection apparatuses 101, 102, 103, 104a, and 104b includes the memory 83 for storing a program which, when executed by the processing circuit 81, consequently executes: a step of detecting a person in a first suspicious state from a recorded video of the surveillance camera 201, and a step of creating first suspicious information including identification information on the person in the first suspicious state, the first suspicious state being a psychological state predefined as a state of probably doing harm to others; a step of detecting a person in a second suspicious state from the recorded video, and a step of creating second suspicious information including identification information on the person in the second suspicious state, the second suspicious state being performing a predefined behavior as a sign of doing harm to others; and a step of identifying a suspicious person based on the first suspicious information and the second suspicious information, and creating suspicious person information including identification information on the suspicious person. Put it differently, this program causes a computer to execute procedures or methods of the first suspicion detector 11, etc. Here, examples of the memory 83 may include non-volatile or volatile semiconductor memories such as a random access memory (RAM), a read-only memory (ROM), a flash memory, an erasable programmable read-only memory (EPROM), an electrically erasable programmable read-only memory (EEPROM), a Hard Disk Drive (HDD), a magnetic disk, a flexible disk, an optical disk, a compact disk, a mini disk, a digital versatile disc (DVD), a drive device thereof, and further any storage medium to be used in the future.

The configuration for implementing the functions of the first suspicion detector 11, etc. using one of the hardware and the software, etc., is described above. However, the configuration is not limited to such but a part of the first suspicion detector 11, etc. may be implemented by dedicated hardware, and another part thereof may be implemented by software, etc. For example, a processing circuit functioning as the dedicated hardware can implement the functions of the first suspicion detector 11, and the processing circuit 81 functioning as the processor 82 can implement the functions of the others through reading and executing a program stored in the memory 83.

As described above, the processing circuit can implement each of the functions by hardware, software, etc. or any combination of these.

When each of the suspicious person detection apparatuses 101, 102, 103, 104a, and 104b detects a suspicious person in a mobile object such as a train, the suspicious person detection apparatuses 101, 102, 103, 104a, and 104b need not always be mounted on the mobile object. For example, the suspicious person detection apparatuses 101, 102, 103, 104a, and 104b are applicable to a system to be built as a system by appropriately combining, for example, a Portable Navigation Device (PND), communication terminals (e.g., mobile terminals such as a mobile phone, a smartphone, and a tablet), functions of applications to be installed into these devices, and a server. Here, functions or constituent elements of the suspicious person detection apparatuses 101, 102, 103, 104a, and 104b described above may be dispersively allocated to the devices building the system or allocated to any one of the devices in a centralized manner.

Embodiments can be freely combined, or appropriately modified and omitted. The aforementioned description is in all aspects illustrative. It is understood that numerous modifications that have not yet been exemplified can be devised.

EXPLANATION OF REFERENCE SIGNS

11 first suspicion detector, 12 second suspicion detector, 13 suspicious person determining unit, 14 notification unit, 15 reference information input unit, 81 processing circuit, 82 processor, 83 memory, 101, 102, 103, 104a, 104b suspicious person detection apparatus, 201 surveillance camera, 202 train vision, 203 control room, 1001, 1002, 1003, 1004 suspicious person detection system.

**Claims**

1. A suspicious person detection apparatus, comprising:

a first suspicion detector to detect a person in a first suspicious state from a recorded video of a surveillance camera, and create first suspicious information including identification information on the person in the first suspicious state, the first suspicious state being a psychological state predefined as a state of probably doing harm to others;
a second suspicion detector to detect a person in a second suspicious state from the recorded video, and create second suspicious information including identification information on the person in the second suspicious state, the second suspicious state being performing a predefined behavior as a sign of doing harm to others; and a suspicious person determining unit to identify a suspicious person based on the first suspicious information and the second suspicious information, and create suspicious person information including identification information on the suspicious person.

2. The suspicious person detection apparatus according to claim 1,
wherein the suspicious person determining unit identifies a person in the first suspicious state and in the second suspicious state as the suspicious person.

3. The suspicious person detection apparatus according to claim 1, comprising
a notification unit to notify an outside of the suspicious person detection apparatus of the suspicious person information.

4. The suspicious person detection apparatus according to claim 1,

wherein the first suspicion detector detects a first suspicious degree of a person appearing in the recorded video, determines a person with the first suspicious degree higher than or equal to a predefined first threshold to be in the first suspicious state, and includes information on the first suspicious degree in the first suspicious information, the first suspicious degree representing a degree of the first suspicious state, the second suspicion detector detects a second suspicious degree of a person appearing in the recorded video, determines a person with the second suspicious degree higher than or equal to a predefined second threshold to be in the second suspicious state, and includes information on the second suspicious degree in the second suspicious information, the second suspicious degree representing a degree of the second suspicious state, and the suspicious person determining unit determines a person in the first suspicious state and in the second suspicious state whose first and second suspicious degrees satisfy a predefined combined condition to be the suspicious person.

5. The suspicious person detection apparatus according to claim 4,

wherein the first suspicion detector calculates the first suspicious degree of the person appearing in the recorded video, with a learning result of first machine learning using the recorded video as an input, and the second suspicion detector calculates the second suspicious degree of the person appearing in the recorded video, with a learning result of second machine learning using the recorded video as an input.

6. The suspicious person detection apparatus according to claim 1,
wherein the surveillance camera is installed in a train.

7. The suspicious person detection apparatus according to claim 1,

wherein the first suspicion detector detects an attribute of the first suspicious state, and includes first suspicious state attribute information in the first suspicious information, the first suspicious state attribute information indicating the attribute of the first suspicious state, and the attribute of the first suspicious state includes at least one of emotional instability, excitation, or malevolence.

8. The suspicious person detection apparatus according to claim 7,

wherein the second suspicion detector detects an attribute of the second suspicious state, and includes second suspicious state attribute information in the second suspicious information, the second suspicious state attribute information indicating the attribute of the second suspicious state, and the attribute of the second suspicious state includes at least one of an approaching behavior, a contact behavior, an unauthorized possession, a behavior of taking an object from clothes, leaving a suspicious object, a behavior of looking for something, or a behavior of being aware of the surveillance camera.

9. The suspicious person detection apparatus according to claim 8,

wherein the suspicious person determining unit obtains a harm attribute that is an attribute of harm that the suspicious person probably does to others, based on the second suspicious state attribute information, and includes harm attribute information in the suspicious person information, the harm attribute information indicating the harm attribute, and

the harm attribute includes at least one of suspicion, theft, groping, injury, robbery, or leaving a dangerous object.

10. The suspicious person detection apparatus according to claim 7,
wherein the first suspicion detector detects a gaze of a person appearing in the recorded video, determines a person whose gaze direction moves a predefined number of times or more within a predefined time to be in the first suspicious state, and determines an attribute of the first suspicious state to be the emotional instability.

11. The suspicious person detection apparatus according to claim 8,
wherein the second suspicion detector detects a gaze of a person appearing in the recorded video, determines a person who gazes the surveillance camera a predefined number of times or more within a predefined time to be in the second suspicious state, and determines an attribute of the second suspicious state to be the behavior of being aware of the surveillance camera.

12. The suspicious person detection apparatus according to claim 9,
wherein the suspicious person determining unit determines, to be the suspicious person, a person in the first suspicious state with the attribute of the malevolence and in the second suspicious state with the attribute of the unauthorized possession or the attribute of the behavior of taking an object from clothes, and determines a harm attribute of the suspicious person to be the injury.

13. The suspicious person detection apparatus according to claim 9,
wherein the suspicious person determining unit determines, to be the suspicious person, a person in the first suspicious state with the attribute of the emotional instability and in the second suspicious state with the attribute of the contact behavior, and determines a harm attribute of the suspicious person to be the groping or theft.

14. The suspicious person detection apparatus according to claim 9,
wherein the suspicious person determining unit determines, to be the suspicious person, a person in the first suspicious state with the attribute of the emotional instability and in the second suspicious state with the attribute of the leaving of a suspicious object, and determines a harm attribute of the suspicious person to be the leaving of a dangerous object.

15. The suspicious person detection apparatus according to claim 3,
wherein the notification unit notifies a suspicious person detection apparatus different from the suspicious person detection apparatus of the suspicious person information.

16. The suspicious person detection apparatus according to claim 15,

wherein the suspicious person detection apparatus obtains the suspicious person information created by the different suspicious person detection apparatus, from the different suspicious person detection apparatus as reference information, and

the suspicious person determining unit identifies the suspicious person based on the first suspicious information, the second suspicious information, and the reference information.

17. A method of detecting a suspicious person, the method comprising:

detecting a person in a first suspicious state from a recorded video of a surveillance camera, and creating first suspicious information including identification information on the person in the first suspicious state, the first suspicious state being a psychological state predefined as a state of probably doing harm to others, the detecting and the creating being performed by a first suspicion detector;

detecting a person in a second suspicious state from the recorded video, and creating second suspicious information including identification information on the person in the second suspicious state, the second suspicious state being performing a predefined behavior as a sign of doing harm to others, the detecting and the creating being performed by the second suspicion detector; and

identifying a suspicious person based on the first suspicious information and the second suspicious information, and creating suspicious person information including identification information on the suspicious person, the identifying and the creating being performed by a suspicious person determining unit.

FIG. 1

FIG. 2

FIG. 3

| ID | ATTRIBUTE | DETECTION DETAILS |
|---|---|---|
| 1-1-1 | EMOTIONAL INSTABILITY | GAZE INSTABILITY |
| 1-1-2 | | LOITERING |
| 1-1-3 | | FACIAL EXPRESSION |
| 1-2-1 | EXCITATION | HEAD SHAKING BEHAVIOR |
| 1-2-2 | | SLIGHT TREMBLING |
| 1-2-3 | | FACIAL EXPRESSION |
| 1-3-1 | MALEVOLENCE | FACIAL EXPRESSION |
| 1-3-2 | | TYPICAL CLOTHES WITH WHICH HARM IS DONE |
| 1-3-3 | | GAZE OF GAZING OR CHECKING PARTICULAR OBJECT OR OTHERS |

FIG. 4

| ID | ATTRIBUTE | BEHAVIOR CLASSIFICATION | HARM ATTRIBUTE |
|---|---|---|---|
| 2-1-1 | APPROACHING BEHAVIOR | DIRECT BEHAVIOR | SUSPICION, THEFT, GROPING |
| 2-2-1 | CONTACT BEHAVIOR | DIRECT BEHAVIOR | SUSPICION, THEFT, GROPING |
| 2-3-1 | UNAUTHORIZED POSSESSION | DIRECT BEHAVIOR | INJURY, ROBBERY |
| 2-4-1 | BEHAVIOR OF TAKING OBJECT FROM CLOTHES | DIRECT BEHAVIOR | SUSPICION, INJURY |
| 2-5-1 | LEAVING SUSPICIOUS OBJECT | DIRECT BEHAVIOR | LEAVING DANGEROUS OBJECT |
| 2-6-1 | BEHAVIOR OF LOOKING FOR SOMETHING | DIRECT BEHAVIOR | THEFT |
| 2-7-1 | BEHAVIOR OF BEING AWARE OF SURVEILLANCE CAMERA | INDIRECT BEHAVIOR | SUSPICION |

FIG. 5

201

A  B

FIG. 6

1002
SUSPICIOUS PERSON DETECTION SYSTEM
102
SUSPICIOUS PERSON DETECTION APPARATUS

201
SURVEILLANCE CAMERA

11
FIRST SUSPICION DETECTOR

12
SECOND SUSPICION DETECTOR

13
SUSPICIOUS PERSON DETERMINING UNIT

14
NOTIFICATION UNIT

203
CONTROL ROOM

202
TRAIN VISION

F I G. 7

```
                      ┌─────────┐
                      │  START  │
                      └────┬────┘
                           │
     ┌─────────────────────┼─────────────────────┐
     │                     ▼              ╭─S101  │
     │         ┌───────────────────────────┐      │
     │         │       DETECT PERSON        │      │
     │         │   IN FIRST SUSPICIOUS STATE│      │
     │         └─────────────┬─────────────┘      │
     │                       ▼          ╭─S102     │
     │         ┌───────────────────────────┐      │
     │         │       DETECT PERSON        │      │
     │         │  IN SECOND SUSPICIOUS STATE│      │
     │         └─────────────┬─────────────┘      │
     │                       ▼        ╭─S103       │
     │       ╱─────────────────────────╲   NO      │
     │      ╱  PERSON IN FIRST AND SECOND ╲─────────┤
     │      ╲ SUSPICIOUS STATES IS PRESENT?╱        │
     │       ╲─────────────┬─────────────╱         │
     │                YES  ▼      ╭─S104            │
     │         ┌───────────────────────────┐       │
     │         │     DETERMINE PERSON       │       │
     │         │ WHO MEETS REQUIREMENT TO BE│       │
     │         │     SUSPICIOUS PERSON      │       │
     │         └─────────────┬─────────────┘       │
     │                       ▼      ╭─S105          │
     │         ┌───────────────────────────┐       │
     │         │     NOTIFY SUSPICIOUS      │       │
     │         │     PERSON INFORMATION     │       │
     │         └─────────────┬─────────────┘       │
     │                       ▼                     │
     └───────────────────────┴─────────────────────┘
```

F I G. 8

FIG. 9

SUSPICIOUS PERSON
IN TRAIN CAR
NUMBER 2!

POSITION RELATIONSHIP
BETWEEN PASSENGERS
AND SUSPICIOUS PERSON IN TRAIN

F I G. 10

```
                    ( START )
                        │
                        │              ┌S201
                        ▼
        ┌───────────────────────────────┐
        │  DETECT FIRST SUSPICIOUS DEGREE │
        │     OF PERSON IN VIDEO          │
        └───────────────────────────────┘
                        │              ┌S202
                        ▼
        ┌───────────────────────────────┐
        │ DETECT SECOND SUSPICIOUS DEGREE │
        │     OF PERSON IN VIDEO          │
        └───────────────────────────────┘
                        │              ┌S203
                        ▼
        ╱─────────────────────────────────╲
       ╱   PERSON IN FIRST AND SECOND       ╲
      ╱  SUSPICIOUS STATES WHOSE FIRST       ╲  NO
      ╲  AND SECOND SUSPICIOUS DEGREES       ╱────
       ╲  SATISFY COMBINED CONDITION        ╱
        ╲        IS PRESENT?               ╱
         ╲───────────────────────────────╱
                        │ YES           ┌S204
                        ▼
        ┌───────────────────────────────┐
        │      DETERMINE PERSON          │
        │ WHO MEETS REQUIREMENTS TO BE   │
        │     SUSPICIOUS PERSON          │
        └───────────────────────────────┘
                        │
                        ▼
```

FIG. 11

1004

SUSPICIOUS PERSON DETECTION SYSTEM

104a

SUSPICIOUS PERSON DETECTION APPARATUS

201a

SURVEILLANCE CAMERA

11a

FIRST SUSPICION DETECTOR

12a

SECOND SUSPICION DETECTOR

13a

SUSPICIOUS PERSON DETERMINING UNIT

14a

COMMUNICATION UNIT

15a

REFERENCE INFORMATION INPUT UNIT

104b

SUSPICIOUS PERSON DETECTION APPARATUS

201b

SURVEILLANCE CAMERA

11b

FIRST SUSPICION DETECTOR

12b

SECOND SUSPICION DETECTOR

13b

SUSPICIOUS PERSON DETERMINING UNIT

14b

COMMUNICATION UNIT

15b

REFERENCE INFORMATION INPUT UNIT

FIG. 12

┌─── 81
PROCESSING
CIRCUIT

FIG. 13

┌─── 82          ┌─── 83
PROCESSOR       MEMORY

## INTERNATIONAL SEARCH REPORT

International application No.

**PCT/JP2022/041004**

### A. CLASSIFICATION OF SUBJECT MATTER

*H04N 7/18*(2006.01)i
FI: H04N7/18 D

According to International Patent Classification (IPC) or to both national classification and IPC

### B. FIELDS SEARCHED

Minimum documentation searched (classification system followed by classification symbols)

H04N7/18; G08B25/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2022/190701 A1 (PANASONIC I PRO SENSING SOLUTIONS CO LTD) 15 September 2022 (2022-09-15) paragraphs [0012]-[0099], fig. 1, 3-9 | 1-4, 6-9, 11, 17 |
| Y | paragraphs [0012]-[0099], fig. 1, 3-9 | 4-5, 10, 15-16 |
| A | paragraphs [0012]-[0099], fig. 1, 3-9 | 12-14 |
| X | WO 2021/186866 A1 (NEC CORP) 23 September 2021 (2021-09-23) paragraphs [0010]-[0012], [0024]-[0050], [0058], [0062], fig. 3-4, 6 | 1-3, 6-9, 17 |
| Y | paragraphs [0010]-[0012], [0024]-[0050], [0058], [0062], fig. 3-4, 6 | 4-5, 10, 15-16 |
| A | paragraphs [0010]-[0012], [0024]-[0050], [0058], [0062], fig. 3-4, 6 | 11-14 |
| Y | JP 7074244 B1 (TOYOTA MOTOR CORP) 24 May 2022 (2022-05-24) paragraph [0024] | 5 |
| Y | WO 2018/008575 A1 (NEC CORP) 11 January 2018 (2018-01-11) paragraphs [0065]-[0067] | 10 |
| Y | JP 2021-162569 A (HONDA MOTOR CO LTD) 11 October 2021 (2021-10-11) paragraph [0095] | 10 |

☑ Further documents are listed in the continuation of Box C.     ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **16 January 2023** | **31 January 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT

International application No.

**PCT/JP2022/041004**

| C. | DOCUMENTS CONSIDERED TO BE RELEVANT |
| :-- | :-- |

| Category* | Citation of document, with indication, where appropriate, of the relevant passages | Relevant to claim No. |
| :--: | :-- | :--: |
| Y | JP 2013-153304 A (HITACHI KOKUSAI ELECTRIC INC) 08 August 2013 (2013-08-08) paragraph [0027] | 15-16 |

## INTERNATIONAL SEARCH REPORT
### Information on patent family members

International application No.

**PCT/JP2022/041004**

| Patent document cited in search report | | | Publication date (day/month/year) | Patent family member(s) | Publication date (day/month/year) |
|---|---|---|---|---|---|
| WO | 2022/190701 | A1 | 15 September 2022 | (Family: none) | |
| WO | 2021/186866 | A1 | 23 September 2021 | (Family: none) | |
| JP | 7074244 | B1 | 24 May 2022 | (Family: none) | |
| WO | 2018/008575 | A1 | 11 January 2018 | US 2019/0163966 A1 paragraphs [0086]-[0088] | |
| JP | 2021-162569 | A | 11 October 2021 | (Family: none) | |
| JP | 2013-153304 | A | 08 August 2013 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007006427 A